(19) Europäisches Patentamt / European Patent Office / Office européen des brevets

(11) **EP 4 715 889 A1**

(12) **EUROPEAN PATENT APPLICATION**
published in accordance with Art. 153(4) EPC

(43) Date of publication:
**25.03.2026  Bulletin 2026/13**

(21) Application number: **24872829.7**

(22) Date of filing: **23.09.2024**

(51) International Patent Classification (IPC):
$H01M\ 4/133^{(2010.01)}$     $H01M\ 4/134^{(2010.01)}$
$H01M\ 4/1393^{(2010.01)}$     $H01M\ 4/1395^{(2010.01)}$
$H01M\ 4/587^{(2010.01)}$     $H01M\ 4/36^{(2006.01)}$
$H01M\ 4/38^{(2006.01)}$     $H01M\ 4/48^{(2010.01)}$
$H01M\ 4/505^{(2010.01)}$     $H01M\ 4/525^{(2010.01)}$

(52) Cooperative Patent Classification (CPC):
H01M 4/133; H01M 4/134; H01M 4/1393;
H01M 4/1395; H01M 4/36; H01M 4/38; H01M 4/48;
H01M 4/505; H01M 4/525; H01M 4/587;
Y02E 60/10

(86) International application number:
**PCT/KR2024/014252**

(87) International publication number:
**WO 2025/071121 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023  KR 20230129455**

(71) Applicant: **LG Energy Solution, Ltd.
Seoul 07335 (KR)**

(72) Inventors:
• **NOH, Suk In
  Daejeon 34122 (KR)**
• **LEE, Yong Ju
  Daejeon 34122 (KR)**

(74) Representative: **BCKIP Part mbB
MK1
Landsbergerstraße 98, 3.Stock
80339 München (DE)**

(54) **NEGATIVE ELECTRODE FOR LITHIUM SECONDARY BATTERY AND METHOD OF MANUFACTURING SAME**

(57)    A negative electrode for a lithium secondary battery includes a negative electrode current collector, a first negative electrode active layer provided on at least one side of the negative electrode current collector, and a second negative electrode active layer provided on the first negative electrode active layer. Also provided is a method for manufacturing the negative electrode, and a lithium secondary battery using the negative electrode. The negative electrode applies CMC binders having different molecular weights to the first and second negative electrode active layers and controls the orientation of the negative electrode active materials, respectively. By doing so, the negative electrode has excellent adhesion between the current collector and the active layer and improves the charging performance when applied to a lithium secondary battery.

[FIG. 3]

**Description**

[Technical Field]

This application claims the benefit of priority from Korean Patent Application No. 10-2023-0129455, filed on Sep. 26, 2023, the disclosures of which are incorporated herein by reference.

The present disclosure relates to a negative electrode for a lithium secondary battery and a manufacturing method thereof.

[Background]

In recent years, lithium secondary batteries have been widely applied not only to small devices such as portable electronic devices, but also to medium and large devices such as battery packs or power storage devices for hybrid and electric vehicles. In particular, as environmental concerns have increased in recent years, there has been a lot of research on electric vehicles and hybrid electric vehicles that can replace vehicles that use fossil fuels, such as gasoline and diesel vehicles, which are major sources of air pollution.

Conventional lithium secondary batteries are limited to short-range electric vehicles due to their limited energy density. Therefore, technology has been intensively developed to increase the energy density of lithium secondary batteries.

However, the automotive lithium secondary batteries that have been developed suffer from a long charging time after discharging as the vehicle is driven. Therefore, as the penetration rate of electric vehicles increases, there is a growing need to shorten the charging time to a level that is acceptable to users. In addition, electric vehicles need to be able to handle high-power situations such as sudden acceleration. This requires high rate discharge performance of lithium secondary batteries, but there is no technology that can fulfill this requirement.

Meanwhile, a lithium secondary battery is a rechargeable power generation device consisting of a laminated structure of positive electrode/separator/negative electrode. When a lithium secondary battery is charged, a lithium deintercalation reaction is induced at the positive electrode of the battery, where lithium contained in the positive electrode active material is oxidized and released, and a lithium intercalation reaction occurs at the negative electrode, where lithium is reduced and enters the negative electrode active material. In general, the deintercalation reaction in the positive electrode active material is faster than the intercalation reaction in the negative electrode active material, so the rapid charge and discharge performance of a lithium secondary battery is mainly determined by the negative electrode.

Materials containing graphite are widely used as the negative electrode active material of the negative electrode. The average potential when the graphite-containing material releases lithium is about 0.2 V (based on $Li/Li^+$), and the discharge potential is relatively flat. Because of this, when graphite is used as the negative electrode active material, the voltage of the secondary battery has an advantage of being high and constant. However, the electrical capacity per unit mass of graphite material is small, 372 mAh/g. On the other hand, the current capacity of graphite materials has been improved close to the theoretical capacity, so it is difficult to further increase the capacity. In addition, when graphite is used as a negative electrode active material, the intercalation reaction of lithium ions proceeds at a slow rate, which limits the fast charging performance compared to other negative electrode active materials.

In order to improve the high capacity and fast charging performance of lithium secondary batteries, various negative electrode active materials have been investigated. For example, silicon has been the subject of much recent research as it has been found that it can reversibly adsorb and release large amounts of lithium through compound formation reactions with lithium. Silicon has a theoretical maximum capacity of about 4020 mAh/g (9800 mAh/cc, specific gravity 2.23), which is very large compared to graphitic materials, and is therefore a useful advantage as a high energy density and/or high capacity negative electrode material. However, silicon has limitations in that it induces large volume changes (~300%) during charge and discharge and does not have high rate discharge characteristics, so the lifetime and fast discharge efficiency of lithium secondary batteries containing it are not high.

Therefore, there is a high need for negative electrode technology that can simultaneously instantiate high capacity characteristics and high rate charge and discharge characteristics in order to fundamentally solve these problems.

[Technical Problem]

It is an object of the present disclosure to provide a negative electrode for a lithium secondary battery capable of simultaneously instantiating high capacity characteristics and high rate charge/discharge characteristics, a method of manufacturing the same, and a lithium secondary battery including the negative electrode.

[Technical Solution]

To address the problems described above, in one aspect, the negative electrode for a lithium secondary battery according to the present disclosure includes:

a negative electrode current collector,
a first negative electrode active layer provided on at least one side of the negative electrode current collector and including a first negative electrode active material and a first carboxyl methyl cellulose (CMC) binder having a weight average molecular weight in the range of 2.5 million to 5 million, and
a second negative electrode active layer provided on the first negative electrode active layer and including a second negative electrode active material and a second CMC binder having a weight average molecular weight in the range of 800,000 to 2 million.

Specifically, the first negative electrode active material has an average alignment degree (O.I) in the range of 10 to 50 according to Equation 1 below. In addition, the second negative electrode active material has an average alignment degree (O.I) in the range of 0.1 to 9 according to Equation 1 below.

$$[Equation\ 1]$$

$$O.I = I_{004}/I_{110}$$

In Equation 1,

$I_{004}$ represents the area of the peak representing the (0,0,4) crystal face of a carbon-based negative electrode active material in the X-ray diffraction spectroscopy (XRD) measurement of the negative electrode active layer,
$I_{110}$ represents the area of the peak representing the (1,1,0) crystal face of a carbon-based negative electrode active material in an X-ray diffraction spectroscopy (XRD) measurement of the negative electrode active layer.

In a specific example, the weight average molecular weight difference between the first and second CMC binders is greater than or equal to 1 million.
In one example, the first and second negative electrode active materials include a first and second carbon-based negative electrode active material, respectively, wherein the first and second carbon-based negative electrode active materials, each independently, include at least one among natural graphite and artificial graphite.
In a more specific example, the second negative electrode active layer further includes a silicon-based negative electrode active material, wherein the silicon-based negative electrode active material includes at least one among silicon (Si), silicon carbide (SiC), and silicon oxide ($SiO_q$, where $0.8 \leq q \leq 2.5$).
In one example, a content of a silicon-based negative electrode active material, based on the combined weight of negative electrode active material contained in the first and second negative electrode active layers, is in the range of 1 wt% to 40 wt%.
In one example, the second negative electrode active layer includes a second carbon-based negative electrode active material and a silicon-based negative electrode active material. In a specific example, the second carbon-based negative electrode active material has an average particle diameter (Dc) of 1 μm to 50 μm, the silicon-based negative electrode active material has an average particle diameter (Ds) of 0.1 μm to 10 μm, wherein the average particle diameter ratio (Dc/Ds) of the second carbon-based negative electrode active material and silicon-based negative electrode active material ranges from 2 to 10.
In another example, at room temperature and 2.5 C charge conditions, the negative electrode according to the present disclosure has a SOC range at which Li precipitation occurs is 35% or more, wherein an interfacial adhesion between the negative electrode current collector and the first negative electrode active layer averages 27 gf/20 mm or more.
In addition, the present disclosure provides a manufacturing method of the aforementioned negative electrode for a lithium secondary battery. In a specific example, the manufacturing method of the negative electrode for lithium secondary battery according to the present disclosure includes: an active layer forming step of forming the first and second negative electrode active layers on the negative electrode current collector; a magnetic field applying step of applying a magnetic field in the range of 1,000 to 10,000 G for 5 to 20 seconds; and a step of drying and rolling the negative electrode.
In a specific example, the first negative electrode active layer includes a first negative electrode active material and a first carboxyl methyl cellulose (CMC) binder having a weight average molecular weight in the range of 2.5 million to 5 million. In addition, the second negative electrode active layer includes a second negative electrode active material and a second CMC binder having a weight average molecular weight in the range of 800,000 to 2 million.

In one example, the active layer forming step forms a second negative electrode active layer before a first negative electrode active layer formed on a negative electrode current collector is dried.

In another example, the active layer forming step simultaneously forms first and second negative electrode active layers formed on a negative electrode current collector.

In one example, the magnetic field applying step is performed by applying a magnetic field in the range of 2,000 to 5,000 G for 7 to 15 seconds.

In addition, the present disclosure provides a lithium secondary battery including the aforementioned negative electrode for lithium secondary battery. In one example, the lithium secondary battery according to the present disclosure includes an electrode assembly comprising a positive electrode, a negative electrode, and a separator disposed between the positive electrode and negative electrode. Here, the negative electrode may include any of the foregoing.

In one example, the positive electrode includes a positive electrode active layer provided on at least one side of the positive electrode current collector and including one or more positive electrode active materials among lithium metal oxides represented by Chemical Formula 1 and Chemical Formula 2 below:

$$[\text{Chemical Formula 1}] \qquad Li_x[Ni_yCo_zMn_wM^1_v]O_2$$

$$[\text{Chemical Formula 2}] \qquad LiMn_pM^2_{1-p}O_4$$

In the above Chemical Formula 1 and Chemical Formula 2,

$M^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,

$M^2$ is Ni, Co, or Fe,

p is $0 \leq p \leq 0.9$.

In a specific example, the lithium secondary battery according to the present disclosure is a pouch-type battery.

[Advantageous Effects]

The negative electrode for a lithium secondary battery according to the present disclosure applies CMC binders having different molecular weights to the first and second negative electrode active layers, thereby controlling the orientation of the negative electrode active material in each layer, respectively. By doing so, the present disclosure improves the adhesion between the negative electrode current collector and the active layer and improves the charging performance of the lithium secondary battery to which the negative electrode is applied.

[Brief Description of the Drawings]

FIG. 1 is a schematic drawing illustrating the orientation of the negative electrode active layer according to Comparative Example 1.

FIG. 2 is a schematic drawing illustrating the orientation of the negative electrode active layer according to Comparative Example 2.

FIG. 3 is a schematic drawing illustrating the orientation of the negative electrode active layer according to Example 1.

[Detailed Description]

The present technology may have various modifications and various examples, and specific examples are illustrated in the drawings and described in detail in the description.

However, it should be understood that the present technology is not limited to specific aspects, and includes all modifications, equivalents or alternatives within the spirit and technical scope of the present technology.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Also, as used herein, "negative electrode active material is oriented" or "negative electrode active material is aligned" means that certain crystal faces representing the two-dimensional planar structure of the negative electrode active material particles (e.g., the ab-axis crystal faces of graphite) are arranged to have a predetermined slope relative to the surface of the negative electrode current collector, which may be different from the negative electrode active material particles themselves being arranged to have a specific orientation within the negative electrode active layer.

In addition, "highly oriented negative electrode active material" may mean that certain crystal faces (e.g., a-b axis crystal faces of graphite) representing the two-dimensional planar structure of the negative electrode active material contained in the negative electrode active layer have a high frequency of having a predetermined slope relative to the negative electrode current collector surface. It may also mean, in some cases, that the crystal faces of the negative electrode active material contained in the negative electrode active layer are arranged at a high angle (e.g., a near-vertical angle, greater than 45°; specifically greater than 60°) relative to the surface of the negative electrode current collector.

In addition, "high alignment of the negative electrode active material" means that the "alignment degree (O.I)" referred to herein has a large value, which may mean that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low alignment of the negative electrode active material" may mean that the "alignment degree (O.I)" has a small value, such that the crystal faces of the carbon-based negative electrode active material contained in the negative electrode active layer are arranged at a high angle (e.g., an angle close to vertical, greater than 45°; specifically greater than 60°) relative to the surface of the negative electrode current collector.

Furthermore, as used herein, "crystal face of the negative electrode active material" means a face on which the atoms of the negative electrode active material form the shape of a crystal, which in the present disclosure may mean a crystal face including a plane of the negative electrode active material, or a crystal face including the a-axis/b-axis/ab-axis of the crystal of the negative electrode active material.

Also, as used herein, "average diameter ($D_{50}$)" means the diameter at which the accumulated value of the particles in the particle diameter distribution is 50%, which is also referred to as the median diameter.

The present disclosure will be described in more detail below.

## Negative electrode for lithium secondary battery

In one aspect, the negative electrode for a lithium secondary battery according to the present disclosure includes:

a negative electrode current collector,
a first negative electrode active layer provided on at least one side of the negative electrode current collector and including a first negative electrode active material and a first carboxyl methyl cellulose (CMC) binder having a weight average molecular weight in the range of 2.5 million to 5 million, and
a second negative electrode active layer provided on the first negative electrode active layer and including a second negative electrode active material and a second CMC binder having a weight average molecular weight in the range of 800,000 to 2 million.

Specifically, the first negative electrode active material has an average alignment degree (O.I) in the range of 10 to 50 according to Equation 1 below. In addition, the second negative electrode active material has an average alignment degree (O.I) in the range of 0.1 to 9 according to Equation 1 below.

$$[\text{Equation 1}]$$

$$\text{O.I} = I_{004}/I_{110}$$

In Equation 1,

$I_{004}$ represents the area of the peak representing the (0,0,4) crystal face of a carbon-based negative electrode active material in the X-ray diffraction spectroscopy (XRD) measurement of the negative electrode active layer,
$I_{110}$ represents the area of the peak representing the (1,1,0) crystal face of a carbon-based negative electrode active material in an X-ray diffraction spectroscopy (XRD) measurement of the negative electrode active layer.

A negative electrode for a lithium secondary battery according to the present disclosure includes a negative electrode active layer on one or both sides of the negative electrode current collector. The negative electrode active layer is a layer that embodies the electrical activity of the negative electrode, and includes as a main component a negative electrode active material that embodies an electrochemical redox reaction during charging and discharging of the battery.

In this case, the negative electrode active layer may have a two-layer structure in which the first negative electrode active layer and the second negative electrode active layer are sequentially stacked on the negative electrode current collector. The two-layer structure of the negative electrode active layer facilitates controlling the composition of each layer. Such a two-layer negative electrode active layer can improve the performance of the negative electrode by controlling the type or content of the components contained in each layer according to a specific purpose, such as increasing the energy efficiency of the battery or improving the adhesion between the active layer and the current collector. For example, the negative electrode active layer may selectively include a silicon-based negative electrode active material with a high charge and discharge capacity of the battery only in the second negative electrode active layer in contact with the positive electrode. Furthermore, the negative electrode active layer may selectively include a negative electrode active material such as natural graphite that has good adhesion only in the first negative electrode active layer in contact with the negative electrode current collector, or may include a high content of a binder that imparts adhesion of the components comprising the active layer.

In one aspect, the first and second CMC binders have a weight average molecular weight difference of greater than or equal to 1 million. Specifically, the difference in the weight average molecular weight of the first and second CMC binders can be in the range of 1 million to 4 million, 1 million to 3 million, 1.8 million to 4 million, or 1.5 million to 2.5 million. In the present disclosure, a high molecular weight CMC binder is applied to the first negative electrode active layer. The first CMC binder contained in the first negative electrode active layer has the effect of increasing the adhesion between the current collector and the first negative electrode active layer and further inhibiting the orientation of the negative electrode active material when a magnetic field is applied. In response, a second CMC binder with a relatively low molecular weight is applied to the second negative electrode active layer. The molecular weight range of the second CMC binder is such that it minimizes the inhibition of the orientation of the negative electrode active material upon application of a magnetic field while maintaining the cohesion of the second negative electrode active layer. Furthermore, in the present disclosure, by applying homogeneous binders to the first and second negative electrode active layers, the interfacial adhesion of the first and second negative electrode active layers is maintained at a high level.

In one aspect, the first and second negative electrode active materials each independently include a first and second carbon-based negative electrode active material. The first and second carbon-based negative electrode active materials include at least one among natural graphite and artificial graphite. Specifically, the first negative electrode active layer includes a first carbon-based negative electrode active material as the negative electrode active material, and the second negative electrode active layer includes a second carbon-based negative electrode active material as the negative electrode active material.

In this case, the carbon-based negative electrode active materials included in each negative electrode active layer may be the same and/or different in type and/or content. Specifically, the first carbon-based negative electrode active material and the second carbon-based negative electrode active material refer to a material having carbon atoms as its main component, and such carbon-based negative electrode active material may include graphite. The graphite may include one or more among natural graphite and artificial graphite. For example, the first carbon-based negative electrode active material and the second carbon-based negative electrode active material may include natural graphite or artificial graphite alone, and in some cases may include a mixture of natural and artificial graphite. In this case, the mixing ratio of natural graphite to artificial graphite may be 5 to 50:50 to 95, or 10 to 30:70 to 90, based on weight. By including natural graphite and artificial graphite in the mixing ratio as described above, the carbon-based negative electrode active material can instantiate a high orientation of the carbon-based negative electrode active material on the surface of the negative electrode current collector while strengthening the adhesion of the negative electrode current collector and the negative electrode active layer.

In one example, the first carbon-based negative electrode active material may include artificial graphite and natural graphite in a weight ratio of 30~50:50~70, and the second carbon-based negative electrode active material may include artificial graphite alone.

Further, the first carbon-based negative electrode active material and the second carbon-based negative electrode active material are preferably spherical graphite assemblies formed by aggregation of a plurality of flaky graphite. The flaky graphite may include natural graphite, artificial graphite, mesophase calcined carbon (bulk mesophase) based on tar and pitch, graphitized coke (raw coke, green coke, pitch coke, needle coke, petroleum coke, etc.), and the like, and is preferably assembled using a plurality of highly crystalline natural graphite. Furthermore, one graphite assembly may be formed by assembling from 2 to 100, preferably from 3 to 20, pieces of flaky graphite.

Such a carbon-based negative electrode active material may have a spherical particle shape. In this case, the sphericity of the graphite particles may be greater than or equal to 0.75, such as 0.75 to 1.0; 0.75 to 0.95; 0.8 to 0.95; or 0.90 to 0.99. As used herein, "sphericity" may mean the ratio of the shortest diameter (short diameter) to the longest diameter (long diameter) of any diameter passing through the center of the particle. A sphericity of 1 means that the shape of the particle is spherical. The sphericity may be determined by measuring the sphericity using a particle shape analyzer, or by measuring the shape of the particle using a scanning electron microscope (SEM), an energy dispersive spectrometer, or the like, and then analyzing the measured results.

The present disclosure can instantiate a high electrical conductivity of the negative electrode active layer by instantiating a shape of the first carbon-based negative electrode active material and the second carbon-based negative electrode active material close to a spherical shape. Therefore, the negative electrode including a spherical carbon-based negative electrode active material can improve the capacity of the secondary battery, and has the advantage of increasing the specific surface area per unit weight of the negative electrode active material, which can improve the adhesion between the negative electrode active layer and the current collector.

In yet another aspect, the second negative electrode active layer may further include a silicon-based negative electrode active material. The silicon-based negative electrode active material is a material including silicon (Si) as a main component and is contained only in the second negative electrode active layer. The present disclosure can increase the charge and discharge capacity of the negative electrode by including the silicon-based negative electrode active material in the second negative electrode active layer adjacent to the positive electrode active layer. In addition, there is a problem that the durability of the negative electrode is reduced when the silicon-based negative electrode active material is included in the first negative electrode active layer due to the large volume change of the silicon-based negative electrode active material during charging and discharging. However, the present disclosure can maintain high durability of the negative electrode by applying the silicon-based negative electrode active material to the second negative electrode active layer.

The silicon-based negative electrode active material includes at least one among silicon (Si), silicon carbide (SiC), and silicon oxide (SiO$_q$, wherein $0.8 \leq q \leq 2.5$). Specifically, such silicon-based negative electrode active materials may include silicon (Si), silicon carbide (SiC), silicon monoxide (SiO), or silicon dioxide (SiO$_2$), which may be included alone or in combination in the second negative electrode active layer. When silicon monoxide (SiO) and silicon dioxide (SiO$_2$) as the silicon-based negative electrode active materials are uniformly mixed or compounded and included in the negative electrode active layer, they may be denoted as silicon oxide (SiO$_q$, wherein $0.8 \leq q \leq 2.5$).

Furthermore, the silicon-based negative electrode active material may be doped or alloyed with Li, Mg, Al, Ca, Ti, or the like. Furthermore, the silicon-based negative electrode active material may be surface treated with a carbon coating layer or the like for the purpose of suppressing volume expansion during charging in the presence of oxygen (O) while improving the electrical conductivity of the negative electrode active material.

Furthermore, the carbon-based negative electrode active material and the silicon-based negative electrode active material contained in each layer of the negative electrode active layer may be included to be at least 85 parts by weight, based on the total weight of the negative electrode active layer, and more specifically may be included to be at least 90 parts by weight, at least 93 parts by weight, or at least 95 parts by weight.

Furthermore, the silicon-based negative electrode active material may be included in an amount of 0.1 to 40 wt% with respect to the total weight of the total negative electrode active material contained in the first negative electrode active layer and the second negative electrode active layer, and may be included in an amount of 0.5 to 20 wt%, 1 to 9 wt%, 5 to 15 wt%, 3 to 7 wt%, 11 to 19 wt%, 13 to 17 wt%, 15 to 20 wt%, 10 to 30 wt%, 20 to 40 wt%, 25 to 35 wt% 15 to 25 wt%, or 9 to 22 wt%. By adjusting the total content ratio of the carbon-based negative electrode active material included in the negative electrode active layer and the content ratio of the silicon-based negative electrode active material included in the total negative electrode active material to the above ranges, the present disclosure can improve the charge capacity per unit mass while reducing the lithium consumption and irreversible capacity loss during the initial charge and discharge of the secondary battery. Furthermore, by minimizing the volume change of the negative electrode active layer during charging and discharging of the secondary battery, the structural stability of the negative electrode active layer can be improved, thereby increasing the lifetime of the secondary battery.

Furthermore, the negative electrode according to the present disclosure can further improve its high-rate charge and discharge characteristics by controlling the crystal structure characteristics of the negative electrode active materials contained in the second negative electrode active layer adjacent to the positive electrode.

In one example, the second carbon-based negative electrode active material contained in the second negative electrode active layer may have an alignment degree (O.I) according to Equation 1 below in the range of 0.1 to 9.

[Equation 1]

$$O.I = I_{004}/I_{110}$$

In Equation 1,

$I_{004}$ represents the area of the peak representing the (0,0,4) crystal face of a carbon-based negative electrode active material in the X-ray diffraction spectroscopy (XRD) measurement of the negative electrode active layer,

$I_{110}$ represents the area of the peak representing the (1,1,0) crystal face of a carbon-based negative electrode active material in an X-ray diffraction spectroscopy (XRD) measurement of the negative electrode active layer.

The alignment degree (O.I) of the second carbon-based negative electrode active material may be an indicator of the degree to which the ab-axis crystal face of the carbon-based negative electrode active material is oriented in a certain direction, specifically with respect to the surface of the negative electrode current collector, when measured by X-ray diffraction (XRD). Specifically, the second negative electrode active layer exhibits peaks of $2\theta=26.5\pm0.2°$, $42.4\pm0.2°$, $43.4\pm0.2°$, $44.6\pm0.2°$, $54.7\pm0.2°$, and $77.5\pm0.2°$ for the second carbon-based negative electrode active material, graphite, in X-ray diffraction measurements. These represent the (0,0,2), (1,0,0), (1,0,1)R, (1,0,1)H, (0,0,4), and (1,1,0) faces of graphite. Here, the peak at $2\theta=43.4\pm0.2°$ can also be seen as an overlap of the peaks corresponding to the (1,0,1) R face of the second carbon-based negative electrode active material and the (1,1,1) face of the current collector, e.g., copper (Cu).

Of these, the ratio of the area obtained by integrating the respective intensities of the peak at $2\theta=54.7\pm0.2°$, representing the (0,0,4) face, and the peak at $2\theta=77.5\pm0.2°$, representing the (1,1,0) face, can be used to measure the alignment degree (O.I) of the second carbon-based negative electrode active material.

Since the peak at $2\theta=54.7\pm0.2°$ is a peak representing a crystal face of the second carbon-based negative electrode active material having a slope with respect to the negative electrode current collector, the alignment degree (O.I) may mean that the slope with respect to the surface of the negative electrode current collector is closer to 90° when the value is close to 0, and the slope with respect to the surface of the negative electrode current collector is closer to 0° or 180° when the value is larger. In other words, the second negative electrode active layer according to the present disclosure may be aligned such that the second carbon-based negative electrode active material has an angle of 60° or more, 70° or more, 70-90°, 80-90°, 65-85°, or 70-85° with respect to the negative electrode current collector. Accordingly, the second negative electrode active layer may have a lower alignment degree (O.I) of the second carbon-based negative electrode active material compared to when the second carbon-based negative electrode active material is aligned at a lower angle of less than 60°. As an example, the second negative electrode active layer may have an O.I of the carbon-based negative electrode active material according to Equation 1 in a range of 0.1 to 9, a range of 0.1 to 8, a range of 0.5 to 9, a range of 1 to 9, a range of 2 to 7, or a range of 3 to 5. Here, the alignment degree (O.I) indicates the alignment of the ab-axis crystal faces of the carbon-based negative electrode active material, and does not indicate the degree to which the carbon-based negative electrode active material particles are aligned by rotating themselves within the active layer.

By adjusting the alignment degree (O.I) of the second carbon-based negative electrode active material contained in the second negative electrode active layer as described above, the present disclosure can obtain an ion migration channel in which lithium ions can travel a shorter distance inside the negative electrode active layer. As a result, the negative electrode of the present disclosure can prevent the increase in resistance due to the long travel distance of lithium ions, thus preventing the high rate charge performance from being degraded due to electrical resistance, and at the same time improving the high rate discharge efficiency.

Meanwhile, the first carbon-based negative electrode active material contained in the first negative electrode active layer may have an alignment degree (O.I) according to Equation 1 described above in the range of 10 to 50. Specifically, the first negative electrode active layer may have an O.I of the carbon-based negative electrode active material according to Equation 1 in the range of 10 to 45, 10 to 30, 15 to 50, 20 to 50, or 20 to 35. By adjusting the O.I of the first carbon-based negative electrode active material contained in the first negative electrode active layer as described above, the present disclosure can increase the interfacial adhesion with the current collector and improve electrode stability. Such electrode stability has the effect of improving the cycling characteristics of the secondary battery to which the negative electrode is applied.

In one aspect, the negative electrode for a lithium secondary battery according to the present disclosure has a SOC range in which Li precipitation occurs of 35% or more at room temperature and 2.5 C charging conditions. The room temperature is, for example, 25 °C. The inventors have confirmed, through various and repeated experiments, that the negative electrodes for lithium secondary batteries according to the present disclosure have a SOC range in which Li precipitation occurs in the range of 35% or more, more specifically in the range of 35 to 40%.

Furthermore, in the negative electrode for a lithium secondary battery according to the present disclosure, the interfacial adhesion between the negative electrode current collector and the first negative electrode active layer averages 27 gf/20 mm or more. More specifically, the interfacial adhesion between the negative electrode current collector and the first negative electrode active layer is in the range of 27 to 50 gf/20 mm on average, in the range of 27 to 40 gf/20 mm on average, or in the range of 30 to 35 gf/20 mm on average. The negative electrode for a lithium secondary battery according to the present disclosure instantiates excellent interfacial adhesion by simultaneously controlling the molecular weight of the binder in the first negative electrode active layer and the alignment of the negative electrode active material.

Furthermore, the second carbon-based negative electrode active material and the silicon-based negative electrode active material contained in the second negative electrode active layer may have a predetermined particle diameter. Specifically, the average particle diameter (Dc) of the second carbon-based negative electrode active material may be from 1 $\mu$m to 50 $\mu$m, the average particle diameter (Ds) of the silicon-based negative electrode active material may be from 0.1 $\mu$m to 10 $\mu$m, and the average particle diameter ratio (Dc/Ds) of the second carbon-based negative electrode active material and the silicon-based negative electrode active material may be from 2 to 10.

Specifically, the second carbon-based negative electrode active material may exhibit an average particle diameter ($D_{50}$, Dc) of 1 $\mu$m to 50 $\mu$m, and may be selectively applied within the range to match the average thickness of the second negative electrode active layer. For example, the second carbon-based negative electrode active material may exhibit an average particle diameter ($D_{50}$) of 1 $\mu$m to 40 $\mu$m; 1 $\mu$m to 30 $\mu$m; 10 $\mu$m to 40 $\mu$m; 15 $\mu$m to 30 $\mu$m; 25 $\mu$m to 50 $\mu$m; 11 $\mu$m to 19 $\mu$m; 15 $\mu$m to 25 $\mu$m; 20 $\mu$m to 30 $\mu$m; 1 $\mu$m to 20 $\mu$m; 1 $\mu$m to 10 $\mu$m; 5 $\mu$m to 15 $\mu$m; 10 $\mu$m to 20 $\mu$m; 15 $\mu$m to 30 $\mu$m; 15 $\mu$m to 20 $\mu$m; 21 $\mu$m to 26 $\mu$m; 25 $\mu$m to 30 $\mu$m; 11 $\mu$m to 17 $\mu$m; 16 $\mu$m to 23 $\mu$m; 2 $\mu$m to 7 $\mu$m; 0.5 $\mu$m to 5 $\mu$m; or 1 $\mu$m to 3 $\mu$m. The spherical second carbon-based negative electrode active material may benefit from a smaller particle diameter to maximize the disorder in the direction of expansion for each of the particles to prevent the particles from swelling upon charging of the lithium ions. However, if the particle diameter of the second carbon-based negative electrode active material is less than 1.0 $\mu$m, a large amount of binder is required due to the increase in the number of particles per unit volume, and the sphericity and spherization yield may be lower. On the other hand, if the maximum particle diameter exceeds 30 $\mu$m, the expansion rate of the negative electrode active material increases significantly during the charge and discharge of the secondary battery, and thus the cohesion between the negative electrode active material particles; and the cohesion between the negative electrode active material particles and the current collector may decrease as the charge and discharge is repeated, resulting in a significant reduction in the cycle characteristics.

Furthermore, the silicon-based negative electrode active material may exhibit an average particle diameter ($D_{50}$, Ds) of 0.1 $\mu$m to 10 $\mu$m, more specifically, 0.1 $\mu$m to 5 $\mu$m; 0.1 $\mu$m to 3 $\mu$m; 0.1 $\mu$m to 1 $\mu$m; 0.5 $\mu$m to 2 $\mu$m; 0.5 $\mu$m to 5 $\mu$m; 1 $\mu$m to 5 $\mu$m; 3 $\mu$m to 7 $\mu$m; 5 $\mu$m to 10 $\mu$m; 1 $\mu$m to 3 $\mu$m; 4 $\mu$m to 9 $\mu$m; 0.1 $\mu$m to 0.9 $\mu$m; 0.8 $\mu$m to 1.2 $\mu$m; or 0.3 $\mu$m to 0.8 $\mu$m average particle diameter ($D_{50}$).

When the minimum particle diameter of the silicon-based negative electrode active material is less than 0.1 $\mu$m, it is difficult to uniformly disperse in the second negative electrode active layer, and as the charging and discharging of the secondary battery proceeds, the redox reactions of the agglomerated and non-agglomerated regions of the silicon-based negative electrode active material are induced unevenly, which may promote deterioration of the second negative electrode active layer. In addition, the crystal face of the silicon-based negative electrode active material is difficult to control when the maximum particle diameter exceeds 10 $\mu$m, and the expansion ratio of the second negative electrode active layer to the unit area increases significantly during charge and discharge of the secondary battery, resulting in a significant decrease in the cycling characteristics as the charge and discharge are repeated.

Further, the average particle diameter ratio (Dc/Ds) of the second carbon-based negative electrode active material and the silicon-based negative electrode active material may be from 2 to 10, more specifically from 2 to 7; 2 to 5; 3 to 7; 4 to 8; 5 to 10; or 6 to 9.

By satisfying the average particle diameter ratio (Dc/Ds) of the second carbon-based negative electrode active material and the silicon-based negative electrode active material in the above range, the present disclosure can induce a structure in which the silicon-based negative electrode active material is filled in the voids formed by the plurality of second carbon-based negative electrode active materials. In this case, the voids serve as a buffer to mitigate the volume expansion of the silicon-based negative electrode active material during charging and discharging of the secondary battery, thereby minimizing the volume expansion of the second negative electrode active layer.

In addition, when the average particle diameter ratio (Dc/Ds) is less than the lower limit of the above-described range, the influence of the second carbon-based negative electrode active material on the silicon-based negative electrode active material is reduced, and it is difficult to control the crystal face of pure silicon having a crystalline phase. Furthermore, if the average particle diameter ratio (Dc/Ds) exceeds the upper limit of the range described above, the deterioration of the second negative electrode active layer is accelerated during charging and discharging of the secondary battery, resulting in a shortened service life.

On the other hand, the average thickness of the negative electrode active layer may be from 100 $\mu$m to 300 $\mu$m, more particularly from 100 $\mu$m to 250 $\mu$m; or from 130 $\mu$m to 190 $\mu$m. By adjusting the average thickness of the negative electrode active layer to the above range, the present disclosure can easily control the crystalline characteristics of the negative electrode active material contained in the second negative electrode active layer, thereby improving the high rate charge and discharge characteristics of the secondary battery including the negative electrode of the present disclosure.

Furthermore, the first negative electrode active layer and the second negative electrode active layer may have the same or different average thicknesses. Specifically, the average thickness ($D_1$) of the first negative electrode active layer and the average thickness ($D_2$) of the second negative electrode active layer may have a ratio of 1: 0.5 to 3, more specifically, a ratio of 1: 0.8 to 2.5, 1:1 to 2.5, 1:1.1 to 2, 1:0.9 to 1.1, or 1:1.5 to 3. By adjusting the ratio of the average thickness of the first negative electrode active layer and the second negative electrode active layer to the above range, the present disclosure can maximize the charge/discharge capacity while maintaining the durability of the negative electrode high.

Furthermore, the first negative electrode active layer and the second negative electrode active layer according to the present disclosure may optionally further include, in addition to the negative electrode active material as the main component, conductive materials, binders, other additives, etc. as required.

The conductive material may include one or more of carbon black, acetylene black, ketjen black, carbon nanotubes, carbon fiber, and the like, but is not limited thereto.

In one example, the negative electrode active layer may contain carbon black, carbon nanotubes, carbon fibers, or the like as a conductive material alone or in combination.

In this case, the content of the conductive material may be 0.1 to 10 parts by weight, and more specifically, 0.1 to 8 parts by weight, 0.1 to 7 parts by weight, 0.1 to 3 parts by weight, 2 to 6 parts by weight, or 0.5 to 2 parts by weight, relative to the total 100 parts by weight of the negative electrode active layer. By controlling the content of the conductive material in the range as described above, the present disclosure can prevent the resistance of the negative electrode from increasing due to a low content of the conductive material, resulting in a decrease in the charging capacity, and the content of the negative electrode active material from decreasing due to an excessive amount of the conductive material, resulting in a decrease in the charging capacity, or a decrease in the fast charging characteristic due to an increase in the loading amount of the negative electrode active layer.

Furthermore, the binder may be suitably applied as a component that assists in the coupling of the negative electrode active material and the conductive material and the like to the current collector, without degrading the electrical properties of the electrode. Specifically, the binder may include one or more selected from the group consisting of vinylidene fluoride-hexafluoropropylene copolymer (PVDF-co-HFP), polyvinylidenefluoride (PVdF), polyacrylonitrile, polymethylmethacrylate, polyvinyl alcohol, carboxylmethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be from 0.1 to 10 parts by weight, more specifically from 0.1 to 8 parts by weight, from 0.1 to 7 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present disclosure can prevent the adhesion of the active layer from deteriorating due to a low content of binder or the electrical properties of the electrode from deteriorating due to an excess of binder.

Furthermore, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface treated with carbon, nickel, titanium, silver, and the like can also be used. Furthermore, the average thickness of the negative electrode current collector may be suitably applied from 1 to 500 μm, considering the conductivity and total thickness of the negative electrode being manufactured.

**Manufacturing method of a negative electrode**

In addition, present disclosure provides a method of manufacturing a negative electrode for a lithium secondary battery. In one aspect, the method of manufacturing a negative electrode for a lithium secondary battery according to the present disclosure includes:

an active layer forming step of forming the first and second negative electrode active layers on the negative electrode current collector;
a magnetic field applying step of applying a magnetic field in the range of 1,000 to 10,000 G for 5 to 20 seconds; and
a step of drying and rolling the negative electrode.

Further, the first negative electrode active layer includes a first negative electrode active material and a first carboxyl methyl cellulose (CMC) binder having a weight average molecular weight in the range of 2.5 million to 5 million, and the second negative electrode active layer includes a second negative electrode active material and a second CMC binder having a weight average molecular weight in the range of 800,000 to 2 million.

A method of manufacturing a negative electrode according to the present disclosure means a method of manufacturing the negative electrode of the present disclosure as described above. The method of manufacturing the negative electrode can produce a negative electrode having a negative electrode active layer having a controlled crystalline characteristic of the negative electrode active material by applying a negative electrode slurry on the negative electrode current collector, applying a magnetic field to the surface of the applied negative electrode slurry, and drying each negative electrode slurry.

The active layer forming step is a step of discharging negative electrode slurry containing a carbon-based negative electrode active material to coat surface of the moving negative electrode current collector. The above step may be applied in any manner conventionally applied in the art without limitation, but preferably by die coating. The die coating method may be performed by means of a slot die having a shim for controlling the discharge conditions of the negative electrode slurry. In this case, by controlling the shape of the shim, the loading amount, coating thickness, etc. of the negative electrode slurry applied to the negative electrode current collector can be easily controlled.

In one aspect, the active layer formation step forms the second negative electrode active layer before the first negative electrode active layer formed on the negative electrode current collector is dried (wet on wet method). In conventional two-layer negative electrodes, the second negative electrode active layer is formed after the first negative electrode active layer is dried (wet on dry method). However, in this conventional method (wet on dry method), the interfacial adhesion between the first and second negative electrode active layers may be problematic, and the migration of lithium ions at the interface between the first and second negative electrode active layers may be inhibited, causing the performance of the electrode to deteriorate. The present disclosure solves these prior art problems by applying a wet on wet method to form the second negative electrode active layer before the first negative electrode active layer is dried.

In yet another aspect, the active layer forming step simultaneously forms the first and second negative electrode active layers formed on the negative electrode current collector. In the present disclosure, the first negative electrode slurry and the second negative electrode slurry can be applied simultaneously on the negative electrode current collector by utilizing a dual slot die. This has the advantage of significantly increasing the process efficiency compared to applying each slurry sequentially.

Meanwhile, the magnetic field applying step may be a step of controlling the crystal properties of the negative electrode active material contained in the negative electrode slurry. Specifically, this step may involve applying a magnetic field to a surface of the negative electrode slurry applied on the negative electrode current collector to align the ab-axis crystal faces of the carbon-based negative electrode active material at a high angle to the negative electrode current collector. In particular, the (1,1,1) crystal face characteristic of the silicon-based negative electrode active material contained in the second negative electrode slurry can be controlled.

In this case, the magnetic field application step may be applied by magnetic parts disposed on the upper and lower parts of the negative electrode current collector, which is moved with a negative electrode slurry applied to its surface. Further, the polarity of the upper and lower magnetic parts may be different from each other.

Furthermore, the alignment degree (O.I) of the carbon-based negative electrode active material contained in the negative electrode slurry may be controlled by the strength of the applied magnetic field, and the magnetic field applying step may be performed under a predetermined magnetic field strength condition.

Specifically, the magnetic field applying step may include applying a magnetic field of 10,000 G (Gauss) or less, and more specifically, the magnetic field may be applied with a strength of 2,000 G to 5,000 G; 2,000 G to 4,500 G; or 2,500 G to 3,500 G.

Furthermore, the magnetic field applying step may be performed for a period of from 1 second to 20 seconds, more particularly for a period of from 7 seconds to 15 seconds; from 7 seconds to 12 seconds; or from 8 seconds to 12 seconds.

In one example, the magnetic field applying step may include applying a magnetic field of $3,000 \pm 50$ G to the negative electrode slurry for 9 to 11 seconds.

Further, the magnetic field applying step may be performed by magnetic parts introduced on the upper and lower parts of the applied negative electrode slurry, as mentioned above, but the size of the magnetic parts may be adjusted to be larger than the size of the negative electrode slurry so that the magnetic field applied to the negative electrode slurry can be applied uniformly over the entire surface of the negative electrode slurry. For example, the magnetic part may have a length ratio of 105% to 200% with respect to the length in the width direction of the negative electrode slurry, more specifically, it may have a length ratio of 110% to 180%; 110% to 160%; 110% to 140%; 110% to 130%; 130% to 150%; or 105% to 120% with respect to the length in the width direction of the negative electrode slurry.

In the magnetic field applying step, the present disclosure satisfies an alignment degree (O.I) of 9 or less of the carbon-based negative electrode active material contained in the second negative electrode slurry by controlling the magnetic field strength, application time, and/or magnetic part size as described above.

Further, the present disclosure may include the step of drying and rolling the negative electrode after the magnetic field applying step.

In this case, the step of drying the negative electrode may be applied in any manner capable of maintaining the orientation of the carbon-based negative electrode active material contained within the negative electrode active layer, without limitation.

For example, the drying step may be performed by applying heat energy to the negative electrode slurry using a hot air dryer, a vacuum oven, or the like to dry the negative electrode slurry.

Further, the step of rolling the dried negative electrode is a step of increasing the density of the negative electrode active layer by applying pressure to the dried negative electrode slurry using a roll press or the like. In this case, the rolling may be performed at a temperature condition higher than room temperature.

Specifically, the rolling may be performed at a temperature of 50°C to 100°C, more specifically at a temperature of 60°C to 100°C; 75°C to 100°C; 85°C to 100°C; 50°C to 90°C; 60°C to 80°C; or 65°C to 90°C. More specifically, the rolling may be performed at a rolling speed of 2 m/s to 7 m/s, or more specifically, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s. Furthermore, the rolling may be performed under a pressure condition of 50 MPa to 200 MPa, more specifically, under a pressure condition of 50 MPa to 150 MPa; 50 MPa to 100 MPa; 100 MPa to 200 MPa; 150 MPa to 200 MPa; or 80 MPa to 140 MPa.

By performing the rolling of the dried negative electrode slurry under the above temperature, speed and/or pressure conditions, the present disclosure can increase the energy density of the negative electrode while minimizing the change in the alignment of the carbon-based negative electrode active material contained in the negative electrode active layer formed.

## Lithium secondary batteries

Furthermore, in one aspect, the present disclosure provides,
a lithium secondary battery including an electrode assembly including a positive electrode, a negative electrode of the present disclosure as described above, and a separator disposed between the positive electrode and negative electrode.

A lithium secondary battery according to the present disclosure includes an electrode assembly having a structure in which a plurality of positive electrodes and a plurality of negative electrodes are disposed alternately and a separator is positioned between them. The lithium secondary battery having the negative electrode of the present disclosure described above not only has a high charge and discharge capacity, but also has excellent high rate charge and discharge characteristics, and is therefore useful as a power source for medium and large devices such as electric vehicles.

In this case, the negative electrode has the same configuration as the configuration described above, so the specific description is omitted.
Further, the positive electrode may include a positive electrode active layer including a positive electrode active material on the positive electrode current collector, the positive electrode active layer optionally further including a conductive material, a binder, other additives, and the like as required.

The positive electrode active material may include one or more among the lithium metal oxides represented by Chemical Formula 1 and Chemical Formula 2 below, which are capable of reacting electrochemically on the positive electrode current collector to reversibly intercalate and deintercalate lithium ions:

$$[\text{Chemical Formula 1}] \qquad Li_x[Ni_yCo_zMn_wM^1{}_v]O_2$$

$$[\text{Chemical Formula 2}] \qquad LiMn_pM^2{}_{1-p}O_4$$

In the above Chemical Formula 1 and Chemical Formula 2,

$M^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,
$M^2$ is Ni, Co, or Fe,
p is $0 \leq p \leq 0.9$.

Lithium metal oxides, represented by Chemical Formula 1 and Chemical Formula 2 above, are materials containing a high content of nickel (Ni) and manganese (Mn), respectively, and when used as a positive electrode active material, have the advantage of being able to stably supply high capacity and/or high voltage electricity compared to conventionally used positive electrode active materials such as lithium iron phosphate ($LiFeO_4$).

In this case, the lithium metal oxide represented by the above Chemical formula 1 may include $LiNi_{0.8}Co_{0.1}Mn_{0.1}O_2$; $LiNi_{0.6}Co_{0.2}Mn_{0.2}O_2$; $LiNi_{0.9}Co_{0.05}Mn_{0.05}O_2$; $LiNi_{0.6}Co_{0.2}Mn_{0.1}Al_{0.1}O_2$; $LiNi_{0.6}Co_{0.2}Mn_{0.15}Al_{0.05}O_2$; $LiNi_{0.7}Co_{0.1}Mn_{0.1}Al_{0.1}O_2$, and the like, and the lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$, and the like, which may be used alone or in combination.

Furthermore, the positive electrode active material may be included in an amount of at least 85 parts by weight based on the weight of the positive electrode active layer, and more specifically may be included in an amount at least 90 parts by weight, at least 93 parts by weight, or at least 95 parts by weight.

Furthermore, the positive electrode active layer may further include a conductive material, a binder, other additives, etc. in addition to the positive electrode active material.

In this case, the conductive material used to improve the electrical performance of the positive electrode may be any material conventionally used in the art, but more particularly may include at least one type selected from the group consisting of natural graphite, artificial graphite, carbon black, acetylene black, denka black, ketjen black, super-P, channel black, furnace black, lamp black, summer black, graphene, and carbon nanotubes.

Furthermore, the conductive material may be included in an amount of 0.1 to 5 parts by weight based on the weight of each positive electrode active layer, more specifically 0.1 to 4 parts by weight; 2 to 4 parts by weight; 1.5 to 5 parts by weight; 1 to 3 parts by weight; 0.1 to 2 parts by weight; or 0.1 to 1 part by weight.

Furthermore, the binder serves to bind the positive electrode active material, the positive electrode additive, and the conductive material to each other, and may be used without limitation as long as it has this function. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in an amount of 1 to 10 parts by weight based on the weight of each positive electrode active layer, more particularly from 2 to 8 parts by weight; or from 1 to 5 parts by weight.

The total thickness of the positive electrode active layer is not particularly limited, but may be from 50 $\mu$m to 300 $\mu$m, more specifically from 100 $\mu$m to 200 $\mu$m; from 80 $\mu$m to 150 $\mu$m; from 120 $\mu$m to 170 $\mu$m; from 150 $\mu$m to 300 $\mu$m; from 200 $\mu$m to 300 $\mu$m; or from 150 $\mu$m to 190 $\mu$m.

Furthermore, as a positive electrode current collector, the positive electrode may use one with a high conductivity without causing chemical changes in the battery. For example, stainless steel, aluminum, nickel, titanium, calcined carbon, and the like can be used, and in the case of aluminum or stainless steel, those that are surface treated with carbon, nickel, titanium, silver, and the like can also be used. Furthermore, the average thickness of the current collector may be suitably applied from 3 to 500 $\mu$m, considering the conductivity and total thickness of the positive electrode being manufactured.

Furthermore, the separator interposed between the positive electrode and the negative electrode of each unit cell is an insulating thin film having high ionic permeability and mechanical strength, and may include one or more polymers such as, but not particularly limited to, polypropylene, polyethylene, polyethylene-propylene copolymers, which are chemically resistant and hydrophobic. The separator may be in the form of a porous polymeric substrate, such as a sheet or nonwoven fabric including the polymer described above, or in some cases, a composite separator including organic or inorganic particles coated by an organic binder on the porous polymeric substrate. Furthermore, the separator may have an average diameter of the pores of 0.01 to 10 $\mu$m, and an average thickness of 5 to 300 $\mu$m.

Meanwhile, the lithium secondary battery according to the present disclosure may be shaped, without being particularly limited, to include a stack-type; zigzag-type; or zigzag-stacked type electrode assembly. As one example, the lithium secondary battery according to the present disclosure may be a pouch-type secondary battery or a prismatic secondary battery.

A pouch-type and/or prismatic secondary battery has the advantage of being highly utilizable in terms of energy density, as they can pack a high density of secondary batteries within a limited space.

[Examples]

Hereinafter, the present disclosure will be described in more detail by way of examples and experimental examples.

However, the following examples and experimental examples are illustrative of the present disclosure, and the present disclosure is not limited to the following examples and experimental examples.

**Examples 1-4 and Comparative Examples 1-6. Preparation of a negative electrode for a lithium secondary battery**

Natural graphite (average particle diameter: 18+1 $\mu$m) and artificial graphite (average particle diameter: 15+1 $\mu$m) were prepared as carbon-based negative electrode active materials and silicon oxide ($SiO_2$) as silicon-based negative electrode active materials, respectively, and a first negative electrode slurry and a second negative electrode slurry were prepared using the prepared carbon-based negative electrode active materials and silicon-based negative electrode active materials.

Specifically, a first carbon-based negative electrode active material was prepared by mixing natural graphite and artificial graphite in a 3.5 to 4.5:5.5 to 6.5 weight ratio to prepare a mixed graphite, and carbon black as a conductive material and first carboxyl methyl cellulose (CMC) and styrene butadiene rubber (SBR) as a binder were prepared. The weight average molecular weight of the first carboxyl methyl cellulose (CMC) binder is shown in Table 1 below. Then, 95 parts by weight of mixed graphite, 1 part by weight of carbon black, 3.5 parts by weight of the first carboxyl methyl cellulose (CMC) and 0.5 parts by weight of styrene butadiene rubber (SBR) were mixed with water to make the first negative electrode slurry to be 50% solids.

In addition, a negative electrode active material was prepared by mixing artificial graphite and silicon oxide ($SiO_2$) in a weight ratio of 85-90:10-15, and carbon black as a conductive material and second carboxyl methyl cellulose (CMC) and styrene butadiene rubber (SBR) as binders were prepared. Then, 95 parts by weight of mixed graphite, 1 part by weight of carbon black, 3.5 parts by weight of second carboxyl methyl cellulose (CMC), and 0.5 parts by weight of styrene butadiene rubber (SBR) were mixed with water to 45% solids to prepare a second negative electrode slurry. The weight average molecular weight of the second carboxyl methyl cellulose (CMC) binder is shown in Table 1 below.

Once each negative electrode slurry was prepared, the first and second negative electrode slurries were simultaneously drawn on a copper thin plate (thickness: 10 μm) under roll-to-roll transfer (transfer speed: 5 m/min) using a double-slot die.

Permanent magnets with a length ratio of 110 to 120% with respect to the length in the width direction of the negative electrode slurry were placed on the upper part of the applied negative electrode slurry and the lower part of the negative electrode current collector, and a magnetic field was applied for 10 seconds by adjusting the magnetic field strength as shown in Table 1 below. The negative electrode slurry with the magnetic field applied was hot air dried to form a negative electrode active layer in the form of sequentially stacked first and second negative electrode active layers on the negative electrode current collector. The formed negative electrode active layer was rolled at a pressure of 100~150 MPa and a transfer rate of 3 m/s at 50±1°C to prepare a negative electrode for a lithium secondary battery (average thickness of the first negative electrode active layer and the second negative electrode active layer: 110±5 μm each).

[Table 1]

| No. | First CMC binder molecular weight (Mw) | Second CMC Binder Molecular Weight (Mw) | Magnetic field strength (Gauss) |
|---|---|---|---|
| Example 1 | 3 million | 1.5 million | 3,000 |
| Example 2 | 3 million | 1 million | 3,000 |
| Example 3 | 4 million | 1.5 million | 3,000 |
| Example 4 | 3 million | 1.5 million | 3,500 |
| Comparative Example 1 | 1.5 million | 1.5 million | Not applied |
| Comparative Example 2 | 1.5 million | 1.5 million | 3,000 |
| Comparative Example 3 | 1.5 million | 3 million | 3,000 |
| Comparative Example 4 | 1 million | 4 million | 3,000 |
| Comparative Example 5 | 3 million | 1.5 million | Not applied |
| Comparative Example 6 | 4 million | 1 million | Not applied |

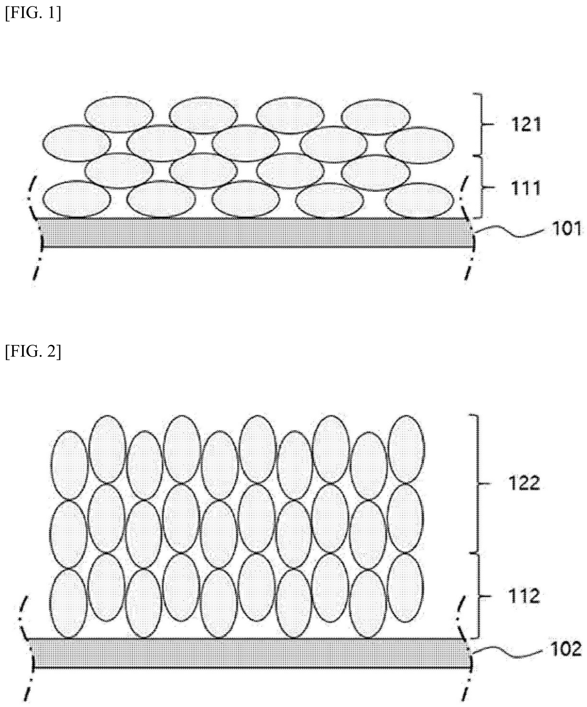

Furthermore, FIGS. 1 to 3 are cross-sectional schematic views illustrating the orientation of the negative electrode active layer for a negative electrode prepared in any of the Comparative Examples or Examples. Specifically, FIG. 1 is a schematic view illustrating the orientation of the negative electrode active layer according to Comparative Example 1. The negative electrode of Comparative Example 1 is prepared without applying a separate magnetic field to the negative electrode. Referring to FIG. 1, the negative electrode of Comparative Example 1 has both the first and second negative electrode active layers 111, 121 oriented or misaligned with the negative electrode current collector 101 in a horizontal direction.

FIG. 2 is a schematic drawing illustrating the orientation of the negative electrode active layer according to Comparative Example 2. The negative electrode of Comparative Example 2 is a negative electrode prepared by controlling both the first and second CMC binders to a relatively low molecular weight. Referring to FIG. 2, the negative electrode of Comparative Example 2 has both the first and second negative electrode active layers 112, 122 oriented perpendicular to the negative electrode current collector 102.

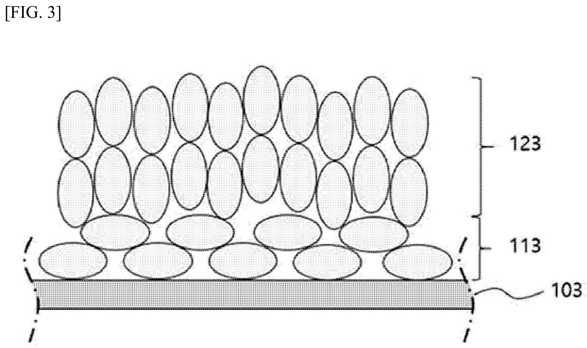

FIG. 3 is a schematic drawing illustrating the orientation of the negative electrode active layer according to Example 1. The negative electrode of Example 1 is a case where the first CMC binder has a relatively high molecular weight and the second CMC binder has a relatively low molecular weight, and a magnetic field is applied during preparation. Referring to FIG. 3, the negative electrode of Example 1 has a first negative electrode active layer 113 oriented in a horizontal direction and a second negative electrode active layer 123 oriented in a vertical direction with respect to the negative electrode current collector 103.

**Experimental Example 1. Measuring alignment** degree **(O.I)**

For each prepared negative electrode, X-ray diffraction spectroscopy (XRD) of the first and second negative electrode active layers was performed to measure the spectra. In this case, the X-ray diffraction (XRD) spectroscopic analysis targeted the negative electrode active materials contained in the first and second negative electrode active layers, respectively, and the measurement conditions for X-ray diffraction (XRD) were as follows:

- Target: Cu (K$\alpha$-ray) graphite monochromator
- Slit: Divergence slit = 1 degree, Reception slit = 0.1 mm, Scattering slit = 1 degree
- Measurement area: (1,1,0) face: 76.5 degrees < 2θ < 78.5 degrees / (0,0,4) face: 53.5 degrees < 2θ < 56.0 degrees.

Then, from the measured spectra targeting the second carbon-based negative electrode active material, the area integrals of the peaks representing the (0,0,4) crystal face and the peaks representing the (1,1,0) crystal face were calculated, and the ratio of these areas ($I_{004}/I_{110}$) was calculated to calculate the area-specific alignment degree (O.I). After the second negative electrode active layer was removed by physical peeling, the O.I was calculated for the first negative electrode active layer in the same way. The calculated values are shown in Table 2 below.

[Table 2]

| No. | Magnetic field strength (Gauss) | Alignment of the first negative electrode active layer (O.I) | Alignment of the second negative electrode active layer (O.I) |
|---|---|---|---|
| Example 1 | 3,000 | 25.2 | 4.64 |
| Example 2 | 3,000 | 23.8 | 3.81 |
| Example 3 | 3,000 | 28.9 | 4.93 |
| Example 4 | 3,500 | 24.1 | 4.34 |
| Comparative Example 1 | Not applied | 35.1 | 34.9 |
| Comparative Example 2 | 3,000 | 5.82 | 3.81 |
| Comparative Example 3 | 3,000 | 6.95 | 21.7 |
| Comparative Example 4 | 3,000 | 5.41 | 24.2 |
| Comparative Example 5 | Not applied | 35.5 | 35.9 |
| Comparative Example 6 | Not applied | 36.1 | 35.7 |

Referring to the results in Table 2, it can be seen that in the negative electrodes of Examples 1 to 4, the alignment degree of the first negative electrode active layer is in the range of 20 to 30, and the alignment degree of the second negative electrode active layer is in the range of 3 to 5. In the present disclosure, the alignment degree of each layer is effectively controlled through the binder molecular weight and magnetic field application of the first and second negative electrode active layers. In this regard, in the case of Comparative Examples 1, 5 and 6, it can be seen that the alignment degrees of the first and second negative electrode active layers are all greater than 30. This indicates that without magnetic field application, the binder molecular weight does not have a significant effect on the alignment degree.

Furthermore, in the case of Comparative Example 2, it can be seen that the alignment degree of both the first and second negative electrode active layers is 6 or less even when a magnetic field is applied. This means that the negative electrode active materials contained in the first and second negative electrode active layers are all oriented in a direction close to vertical.

In the negative electrode of Comparative Examples 3 and 4, the binder contained in the second negative electrode active layer is controlled to a high molecular weight (Mw=3 million, 4 million). In the negative electrode of Comparative Examples 3 and 4, it can be seen that the alignment of the second negative electrode active layer is greater than 20, which indicates that the alignment in the vertical direction is not properly achieved.

**Experimental Example 2. Evaluating adhesion**

For each negative electrode specimen prepared in Examples 1-4 and Comparative Examples 1-6, adhesion was measured using the 90° peel test method. Each negative electrode specimen was constructed with a negative electrode active layer formed on one side of a copper thin plate, which is the current collector. Each negative electrode specimen was attached to a slide glass with the surface not formed with the negative electrode active layer side facing each other. The negative electrode specimens were attached to the slide glass using imide double-sided tape. The specimen was then adhered with a 2 kg roller for 10 round trips.

Then, the force of peeling from the slide glass was measured by pulling one side of the insulating layer at 100 mm/min using a UTM (TA) instrument. At this time, the measuring angle of the slide glass and the electrode was 90°.

Here, three specimens of each metal were prepared, and the adhesion of each insulation layer was measured using the 90° peel test described above, and the average value was calculated, and the results are shown in Table 3 below.

**Experimental Example 3. Measuring SOC of Li precipitation occurrence**

A battery cell was prepared using the negative electrode prepared in Examples 1-4 and Comparative Examples 1-6. Specifically, a positive electrode was prepared by applying and drying a positive electrode slurry including NCM622 active material on an aluminum metal thin film. An electrode assembly was prepared by interposing and laminating a separator between the negative electrode and positive electrode. The battery cell was then prepared by injecting an electrolyte solution containing 1 M of $LiPF_6$ dissolved in a mixed solvent of dimethyl carbonate (DEC) and ethylene carbonate (EC) (DEC:EC=1:1).

For each prepared battery cell, a 2.5C CC charge was performed at 25°C conditions. During the charging process, the SOC (%) at which Li plating occurs was detected in 5% increments by profile analysis. The detection results are shown in Table 3 below.

[Table 3]

| No. | Electrode Adhesion (gf/20mm) | Li Precipitation Occurrence SOC (%) |
|---|---|---|
| Example 1 | 30 | 35-40% |
| Example 2 | 30 | 40% or more |
| Example 3 | 35 | 35-40% |
| Example 4 | 28 | 35-40% |
| Comparative Example 1 | 25 | 20-25% |
| Comparative Example 2 | 12 | 35-40% |
| Comparative Example 3 | 15 | 30-35% |
| Comparative Example 4 | 10 | 25-30% |
| Comparative Example 5 | 30 | 20% or less |
| Comparative Example 6 | 35 | 20% or less |

Referring to the results in Table 3, it can be seen that the negative electrode of Examples 1 to 4 has a controlled adhesion to the current collector to be 28 gf/20mm or more. At the same time, the SOC of Li precipitation is greater than or equal to 35%. In comparison, the negative electrode of Comparative Examples 1, 5, and 6 shows that the adhesion to the current collector is not bad, but the Li precipitation generation SOC is 25% or less or 20% or less. Furthermore, the negative electrode of Comparative Examples 2 to 4 was found to have poor electrode adhesion.

The present disclosure provides a negative electrode capable of minimizing Li precipitation without compromising negative electrode adhesion, and a lithium secondary battery applied with the same.

Although the above has been described with reference to a preferred aspect of the present technology, it will be understood by those skilled in the art or having ordinary knowledge in the art that various modifications and changes can be made to the present technology without departing from the field of thought and technology described in the following patent claims.

Accordingly, the technical scope of the present technology is not limited to what is described in the detailed description of the specification, but should be defined by the claims of the patent.

[Description of Reference Numerals]

101, 102, 103: NEGATIVE ELECTRODE CURRENT COLLECTOR
111, 112, 113: FIRST NEGATIVE ELECTRODE ACTIVE LAYER

121, 122, 123: SECOND NEGATIVE ELECTRODE ACTIVE LAYER

**Claims**

1. A negative electrode for a lithium secondary battery, comprising:

   a negative electrode current collector,
   a first negative electrode active layer provided on at least one side of the negative electrode current collector,
   wherein the first negative electrode active layer includes a first negative electrode active material and a first carboxyl methyl cellulose binder having a weight average molecular weight in a range of 2.5 million to 5 million, and
   a second negative electrode active layer provided on the first negative electrode active layer, wherein the second negative electrode active layer includes a second negative electrode active material and a second carboxyl methyl cellulose binder having a weight average molecular weight in a range of 800,000 to 2 million; wherein the first negative electrode active material has an average alignment degree O.I in a range of 10 to 50 according to Equation 1 below, and
   the second negative electrode active material has an average alignment degree O.I in a range of 0.1 to 9 according to Equation 1 below:

$$[\text{Equation 1}]$$

$$O.I = I_{004}/I_{110}$$

   wherein,
   $I_{004}$ represents an area of a peak representing a (0,0,4) crystal face of a carbon-based negative electrode active material in an X-ray diffraction spectroscopy XRD measurement of a negative electrode active layer,
   $I_{110}$ represents an area of a peak representing a (1,1,0) crystal face of a carbon-based negative electrode active material in an X-ray diffraction spectroscopy XRD measurement of a negative electrode active layer.

2. The negative electrode for the lithium secondary battery of claim 1, wherein
   a weight average molecular weight difference between the first and second carboxyl methyl cellulose binders is greater than or equal to 1 million.

3. The negative electrode for the lithium secondary battery of claim 1, wherein

   the first and second negative electrode active materials include a first and second carbon-based negative electrode active material, respectively, wherein
   the first and second carbon-based negative electrode active materials, each independently, include at least one of natural graphite or artificial graphite.

4. The negative electrode for the lithium secondary battery of claim 3, wherein

   the second negative electrode active layer further includes a silicon-based negative electrode active material, wherein
   the silicon-based negative electrode active material includes at least one of silicon Si, silicon carbide SiC, or silicon oxide $SiO_q$, where $0.8 \leq q \leq 2.5$.

5. The negative electrode for the lithium secondary battery of claim 4, wherein

   a content of the silicon-based negative electrode active material,
   based on a combined weight of negative electrode active material contained in the first and second negative electrode active layers,
   is in a range of 1 wt% to 40 wt%.

6. The negative electrode for the lithium secondary battery of claim 4, wherein
   the second negative electrode active layer comprises:

the second carbon-based negative electrode active material and the silicon-based negative electrode active material, wherein

the second carbon-based negative electrode active material has an average particle diameter Dc ranging from 1 μm to 50 μm,

the silicon-based negative electrode active material has an average particle diameter Ds ranging from 0.1 μm and 10 μm, wherein

an average particle diameter ratio Dc/Ds of the second carbon-based negative electrode active material and the silicon-based negative electrode active material ranges from 2 to 10.

7. The negative electrode for the lithium secondary battery of claim 1, wherein

at room temperature and 2.5 C charge conditions, the SOC range at which Li precipitation occurs is 35% or more, wherein

an interfacial adhesion between the negative electrode current collector and the first negative electrode active layer averages 27 gf/20 mm or more.

8. A manufacturing method of a negative electrode for a lithium secondary battery, comprising:

forming first and second negative electrode active layers on a negative electrode current collector;

applying a magnetic field in a range of 1,000 to 10,000 G for 5 to 20 seconds; and

drying and rolling a negative electrode, wherein

the first negative electrode active layer includes a first negative electrode active material and a first carboxyl methyl cellulose binder having a weight average molecular weight in a range of 2.5 million to 5 million, wherein

the second negative electrode active layer includes a second negative electrode active material and a second carboxyl methyl cellulose binder having a weight average molecular weight in a range of 800,000 to 2 million.

9. The manufacturing method of claim 8, wherein
the forming of the first and second negative electrode active layers on the negative electrode current collector comprises forming the second negative electrode active layer before the first negative electrode active layer formed on the negative electrode current collector is dried.

10. The manufacturing method of claim 8, wherein
the forming of the first and second negative electrode active layers on the negative electrode current collector simultaneously forms the first and second negative electrode active layers formed on the negative electrode current collector.

11. The manufacturing method of claim 8, wherein
the applying of the magnetic field is performed by applying a magnetic field in a range of 2,000 to 5,000 G for 7 to 15 seconds.

12. A lithium secondary battery comprising an electrode assembly comprising a positive electrode, the negative electrode for the lithium secondary battery according to claim 1, and a separator disposed between the positive electrode and the negative electrode for the lithium secondary battery.

13. The lithium secondary battery of claim 12, wherein
the positive electrode includes a positive electrode active layer provided on at least one side of a positive electrode current collector and including one or more positive electrode active materials among lithium metal oxides represented by Chemical Formula 1 and Chemical Formula 2 below:

$$[\text{Chemical Formula 1}] \quad \text{Li}_x[\text{Ni}_y\text{Co}_z\text{Mn}_w\text{M}^1_v]\text{O}_2$$

$$[\text{Chemical Formula 2}] \quad \text{LiMn}_p\text{M}^2_{1-p}\text{O}_4$$

wherein,

$\text{M}^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where y+z+w+v=1,

$M^2$ is Ni, Co, or Fe, and

p is $0 \leq p \leq 0.9$.

14. The lithium secondary battery of claim 12, wherein the lithium secondary battery is a pouch-type battery.

[FIG. 1]

121

111

101

[FIG. 2]

122

112

102

EP 4 715 889 A1

[FIG. 3]

21

## INTERNATIONAL SEARCH REPORT

| International application No. |
|---|
| **PCT/KR2024/014252** |

| **A. CLASSIFICATION OF SUBJECT MATTER** |
|---|
| **H01M 4/133**(2010.01)i; **H01M 4/134**(2010.01)i; **H01M 4/1393**(2010.01)i; **H01M 4/1395**(2010.01)i; **H01M 4/587**(2010.01)i; **H01M 4/36**(2006.01)i; **H01M 4/38**(2006.01)i; **H01M 4/48**(2010.01)i; **H01M 4/505**(2010.01)i; **H01M 4/525**(2010.01)i |
| According to International Patent Classification (IPC) or to both national classification and IPC |

| **B. FIELDS SEARCHED** |
|---|
| Minimum documentation searched (classification system followed by classification symbols) |
| H01M 4/133(2010.01); H01M 10/052(2010.01); H01M 4/04(2006.01); H01M 4/13(2010.01); H01M 4/583(2010.01); H01M 4/62(2006.01); H01M 50/249(2021.01); H01M 50/258(2021.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 리튬 이차전지 (lithium secondary battery), 음극 (anode), 카복시메틸셀룰로오즈 (carboxyl methylcellulose), 바인더 (binder), 중량평균분자량 (average molecular weight) |

| **C. DOCUMENTS CONSIDERED TO BE RELEVANT** | | |
|---|---|---|
| Category* | Citation of document, with indication, where appropriate, of the relevant passages | Relevant to claim No. |
| A | KR 10-2544496 B1 (LG ENERGY SOLUTION, LTD.) 20 June 2023 (2023-06-20)<br>See abstract; paragraphs [0111], [0148]-[0159], [0168], [0170], [0174] and [0215]; and claim 1. | 1-14 |
| A | CN 113036298 A (NINGDE CONTEMPORARY AMPEREX TECH. CO., LTD.) 25 June 2021 (2021-06-25)<br>See abstract; paragraphs [0030] and [0074]-[0080]; and claims 1-11. | 1-14 |
| A | KR 10-2017-0055359 A (LG CHEM, LTD.) 19 May 2017 (2017-05-19)<br>See abstract; paragraph [0035]; and claims 1-16. | 1-14 |
| A | KR 10-2022-0009279 A (SK ON CO., LTD.) 24 January 2022 (2022-01-24)<br>See abstract; and claims 1-12. | 1-14 |
| A | JP 2019-096501 A (NEC CORP.) 20 June 2019 (2019-06-20)<br>See abstract; and claims 1-16. | 1-14 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014252**

| Patent document cited in search report | | | Publication date (day/month/year) | Patent family member(s) | | | Publication date (day/month/year) |
|---|---|---|---|---|---|---|---|
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| CN | 113036298 | A | 25 June 2021 | CN | 113036298 | B | 11 February 2022 |
| KR | 10-2017-0055359 | A | 19 May 2017 | CN | 107534153 | A | 02 January 2018 |
| | | | | CN | 107534153 | B | 16 October 2020 |
| | | | | EP | 3276714 | A1 | 31 January 2018 |
| | | | | EP | 3276714 | B1 | 28 April 2021 |
| | | | | JP | 2018-517246 | A | 28 June 2018 |
| | | | | JP | 6659012 | B2 | 04 March 2020 |
| | | | | KR | 10-1938236 | B1 | 14 January 2019 |
| | | | | PL | 3276714 | T3 | 13 September 2021 |
| | | | | US | 10644316 | B2 | 05 May 2020 |
| | | | | US | 2018-0358622 | A1 | 13 December 2018 |
| | | | | WO | 2017-082546 | A1 | 18 May 2017 |
| KR | 10-2022-0009279 | A | 24 January 2022 | CN | 113948670 | A | 18 January 2022 |
| | | | | EP | 3940819 | A1 | 19 January 2022 |
| | | | | KR | 10-2022-0013447 | A | 04 February 2022 |
| | | | | US | 11855248 | B2 | 26 December 2023 |
| | | | | US | 11929508 | B2 | 12 March 2024 |
| | | | | US | 2022-0020995 | A1 | 20 January 2022 |
| | | | | US | 2022-0271292 | A1 | 25 August 2022 |
| JP | 2019-096501 | A | 20 June 2019 | JP | 2020-096501 | A5 | 26 November 2020 |
| | | | | JP | 7031249 | B2 | 08 March 2022 |
| | | | | US | 10910635 | B2 | 02 February 2021 |
| | | | | US | 2019-0165368 | A1 | 30 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230129455